(19) Europäisches Patentamt
European Patent Office
Office européen des brevets

(11) Numéro de publication : **0 083 272**
**B1**

(12) # FASCICULE DE BREVET EUROPÉEN

(45) Date de publication du fascicule du brevet : **07.08.85**

(51) Int. Cl.⁴ : **B 01 D 11/04**, C 22 B 60/02, C 22 B 3/00

(21) Numéro de dépôt : **82402312.1**

(22) Date de dépôt : **16.12.82**

(54) **Extraction liquide-liquide à l'aide de microémulsions de substances dissoutes dans l'eau.**

(30) Priorité : **28.12.81 FR 8124267**

(43) Date de publication de la demande : **06.07.83 Bulletin 83/27**

(45) Mention de la délivrance du brevet : **07.08.85 Bulletin 85/32**

(84) Etats contractants désignés : **DE GB IT**

(56) Documents cités :
**GB-A- 2 064 505**
**US-A- 4 087 512**
**US-A- 4 233 278**
**US-A- 4 248 703**
**US-A- 4 290 882**

(73) Titulaire : **SOCIETE NATIONALE ELF AQUITAINE**
**Tour Aquitaine**
**F-92400 Courbevoie (FR)**

(72) Inventeur : **Bauer, Denise**
**8 bis Allée de la Fontaine**
**F-93340 Le Raincy (FR)**
Inventeur : **Komornicki, Jacques**
**12 Lotissement Curt**
**F-64230 Lescar (FR)**
Inventeur : **Tellier, Jacques**
**Chemin des Vignes**
**Lons F-64140 Billere (FR)**

(74) Mandataire : **Kohn, Armand**
**5 Avenue Foch**
**F-92380 Garches (FR)**

**EP 0 083 272 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention a pour objet l'extraction de différentes substances à partir de leurs solutions aqueuses, au moyen de solvants hydrophobes. Elle se rapporte plus particulièrement à l'extraction de cations à partir de leurs solutions acides, avec intervention de composés tiers, notamment de chelatants.

L'extraction liquide-liquide est bien connue d'une façon générale et en particulier dans ses applications à l'extraction de métaux, surtout métaux peu courants, des solutions aqueuses où ces cations se trouvent à une faible concentration. Cette technique connue consiste à agiter la solution aqueuse avec un liquide hydrophobe appelé diluant, le plus souvent un hydrocarbure, tenant en solution un composé susceptible de donner, avec le cation à extraire, un complexe soluble dans ce liquide hydrophobe ; on sépare ensuite le liquide non miscible à l'eau et on récupère le complexe du cation voulu par une réextraction au moyen d'une solution aqueuse acide ou alcaline. Les liquides hydrophobes ou « diluants », les plus employés, sont des hydrocarbures, éventuellement halogénés, par exemple les dodécane, kérosène, benzène, solvant naphta, chloroforme, tétrachlorure de carbone, etc. Quant aux « extractants », c'est-à-dire les composés destinés à former une combinaison liposoluble avec le cation voulu, ils sont généralement choisis, à l'heure actuelle, parmi les dérivés organophosphorés, les dérivés de l'hydroxy-8 quinoléine, les dérivés des α ou β hydroxyoximes, les amines grasses et leurs sels.

La méthode d'extraction liquide-liquide conduit parfois à des opérations longues, ce qui constitue un défaut au point de vue industriel : en effet, l'extraction, c'est-à-dire le passage de la substance à extraire du milieu aqueux dans la phase hydrophobe, demande quelquefois un temps prohibitif ; ce temps peut atteindre même, dans certains cas, plusieurs heures. Afin de pallier cet inconvénient, on a proposé récemment d'effectuer l'extraction par le liquide hydrophobe, en produisant d'abord une microémulsion de ce liquide, en équilibre avec la phase aqueuse qui avait contenu les éléments à extraire. Cette solution conduit en effet à une accélération considérable de l'extraction, au point que celle-ci peut ne durer que quelques minutes, dans les cas où il faut une ou plusieurs heures avec la méthode classique. Le travail en microémulsion est donc fort intéressant ; cependant, il comporte certains inconvénients non négligeables. En particulier, la récupération de l'élément extrait, c'est-à-dire la réextraction de cet élément de la microémulsion, est souvent difficile. D'abord la décantation de la phase hydrophobe, après l'addition de réactifs appropriés, est assez longue ; d'autre part, des quantités non négligeables de solution aqueuse restent dispersées dans la phase hydrophobe, ce qui nuit à la pureté de l'élément extrait. Il est à noter également que l'agent tensioactif et son co-agent, nécessaires à l'obtention de la microémulsion, sont partiellement perdus du fait de leur passage dans la phase aqueuse, au cours de la réextraction.

La présente invention remédie à la fois aux inconvénients de la méthode classique et à ceux de l'extraction par microémulsion (WII) (c'est-à-dire microémulsion d'un liquide organique dans une phase aqueuse, accompagnée d'une phase distincte de ce même liquide). Elle est basée sur le fait qu'il est généralement possible de produire une microémulsion accompagnée des deux phases distinctes, hydrophobe et aqueuse, et qu'alors la séparation de la phase intéressante est rapide, tandis que la perte de l'agent tensio-actif est évitée.

L'invention s'applique avantageusement à l'hydro-métallurgie où elle est particulièrement utile pour les métaux dont l'extraction liquide/liquide, classique, est lente, mais à laquelle conviennent les extractants connus, tels que α et β hydroximes, composés organo-phosphorés ou hydroxyquinoléines. Le nouveau procédé peut être employé en vue de la séparation de différents métaux des groupes II à VIII de la Classification Périodique des éléments, notamment de Pt, Pd, Rh, U, Ni, Fe, Al, Ge, Cu et autres.

Le nouveau procédé, suivant l'invention, consistant à effectuer l'extraction liquide-liquide par la création d'une microémulsion entre la solution aqueuse et le liquide hydrophobe, est caractérisé en ce que les conditions de formation de cette microémulsion sont réglées de telle façon que l'on obtienne un système en trois phases, une phase hydrophobe et une phase aqueuse et, entre elles, une phase intermédiaire, constituée par une microémulsion de la solution aqueuse avec le liquide hydrophobe.

Le liquide hydrophobe étant pratiquement toujours constitué par une substance organique, notamment par un hydrocarbure, éventuellement halogéné, aliphatique ou aromatique, contenant en solution des substances liposolubles (extractant, modifiant, on l'appelle — dans la suite de la présente description — phase organique.

D'après la classification proposée par P. A. Winsor (Trans. Faraday Soc. (1948), 44, 376) le type de système, utilisé suivant la présente invention, est désigné dans l'art par Winsor III.

Le principal avantage du procédé de l'invention réside en ce que la phase médiane, qui est une microémulsion, retient la presque totalité de l'agent tensio-actif employé et qu'elle peut être réutilisée pour une nouvelle extraction. Ainsi, l'invention permet-elle d'économiser les agents tensio-actifs.

On constate également que la phase organique retient extrêmement peu de solution aqueuse, d'où avantage pour la pureté de l'élément qui est récupéré de cette phase.

Il est à noter que la séparation en trois couches, dans le procédé de l'invention, est plus rapide que dans les systèmes à deux phases. D'autre part, la réextraction de l'élément recherché, à partir de la couche organique, par le traitement avec une solution aqueuse, est aisée et comprend une décantation rapide, grâce à l'absence d'agent tensio-actif dans cette phase organique.

Le nouveau procédé peut être pratiqué avec les différentes matières qui intervenaient jusqu'à présent

dans la technique antérieure, touchant les extractions liquide-liquide. Ainsi, peut-on employer par exemple, en tant que diluants les différents hydrocarbures, déjà signalés plus haut, aliphatiques ou aromatiques, éventuellement halogénés, notamment les solvants habituellement utilisés, connus dans le commerce sous les noms de Kérosène, Solvesso, Escaid, Ketrul, Kerdane, provenant de coupes pétrolières, choisis par leur faible coût et leur point d'éclair élevé.

Le diluant peut contenir un « modifiant » comme un alcool à longue chaîne. Dans un procédé classique d'extraction liquide-liquide, le modifiant a pour rôle d'améliorer le désengagement des phases au moment de la décantation. Dans le cas d'un système triphasé, comportant une microémulsion, le co-tensio-actif est souvent un alcool, qui se substitue au modifiant.

De même, en ce qui concerne les composés susceptibles de donner une combinaison soluble dans le liquide organique, en particulier les extractants chélatants, la technique connue en offre un choix assez vaste : on peut donc, selon la nature de la substance minérale à extraire et le milieu d'extraction, choisir le composé qui convient le mieux dans chaque cas. Ainsi, par exemple, peut-on utiliser les différents esters phosphoriques ou thiophosphoriques, notamment l'hydrogénophosphate de di(éthyl-2 hexyle), de l'hepta décyle, de dodécyle, de di(méthyl-1-heptyle), de di-isooctyle, de di(éthyl-2-méthyl-4 pentyle), de di(propyl-2-méthyl-4 pentyle), d'octyle et de phényle ; dithiophosphates acides de di(di-isobutyl-méthyle), ou de di(éthyl-2 hexyle).

D'autres extractants, très employés à l'heure actuelle, sont des dérivés de la quinoléine, notamment de l'hydroxy-8 quinoléine ; tels sont en particulier les dérivés portant une chaîne aliphatique en position 7, c'est-à-dire en ortho du groupe —OH ; ces chaînes ont généralemnt jusqu'à 12 atomes de carbone et peuvent comporter une double liaison, comme c'est le cas de la (nonyl-3-propényl-1)-7 hydroxy-8-quinoléine (« Kelex 100 »). Diverses oximes sont également employées, comme par exemple (alkyl-4-phényl)-1 propane dione-1,2 dioxime ou la dioxime correspondante de la nonane dione, une (alkyl-4 phényl)-2 hydroxy-2-imino acétaldéhyde-oxime, les alkyles ayant généralement 6 à 18 atomes de carbone.

Puisque la formation d'une microémulsion exige la présence d'un agent tensio-actif et d'un co-tensio-actif, qui est le plus souvent un alcool, le procédé suivant l'invention comprend naturellement l'adjonction de telles substances, qui sont, dans la pratique courante, introduites d'avance dans le liquide organique servant à l'extraction, ensemble avec l'extractant.

Les nombreux agents tensio-actifs, susceptibles de servir à la préparation d'une microémulsion, sont connus, ainsi que les divers co-tensio-actifs. Cependant, pour la réalisation de l'invention, il convient de prendre soin de choisir, de façon appropriée, ces deux sortes d'agents et leurs proportions, pour obtenir un système Winsor III comportant bien les trois phases, comme exposé plus haut. Ce choix est à la portée de l'homme de l'art.

Le tensio-actif est également choisi de telle sorte qu'il ne contrarie pas le processus de formation d'un complexe liposoluble entre le ou les cations à extraire et l'extractant.

En ce qui concerne la nature des agents tensio-actifs, qui peuvent être anioniques ou/et non ioniques, de préférence caractérisée par une balance hydrophile-lipophile supérieure à 9, on peut citer, à titre d'exemples non limitatifs, les types suivants de composés : sulfonates d'hydrocarbures, alkyl ou alkyl-aryl sulfonates des métaux alcalins, esters phosphoriques d'alcools gras éthoxylés, sulfo-succinates, alkyl phénols éthoxylés, notamment à plus de 3 oxydes d'éthylène, polyalcools poly-éthoxylkés, alkyl-éthers de sucres, comme par exemple l'éther décylique du glucose, alcools de sorbitan ou esters poly-éthoxylés de ce dernier, mono ou di-alcanolamides, notamment ceux des huiles végétales, comme le mono ou di-éthanolamide de coprah.

A titre d'exemple non limitatif, on rappelle, ci-après, quels sont les co-tensio-actifs le plus souvent employés dans l'industrie. Alcools en $C_3$ à $C_{16}$, primaires, secondaires ou tertiaires, à chaîne linéaire ou ramifiée ; alkyl-glycols à chaîne hydrocarbonée comportant 3 à 16 atomes de carbone, cette chaîne pouvant être linéaire ou ramifiée ; amines primaires, secondaires ou tertiaires ; alkyles porteurs de groupe $PO_3$. Conviennent d'ailleurs, d'une façon générale, les composés lipophiles comportant un groupe polaire.

Les proportions de tensio-actifs et de co-tensio-actifs à utiliser dépendent tant de la nature de chacun d'eux que de celle du liquide organique et des composants de la solution aqueuse en présence ; ces proportions ne peuvent donc pas être indiquées à priori. On peut cependant admettre, avec une certaine approximation, que pour les tensio-actifs les plus efficaces, la concentration de ces agents est de l'ordre de 0,025 à 0,40 mole par litre de liquide organique, et de préférence, de 0,05 à 0,25 ; quant aux concentrations en alcools, elles seraient d'environ 0,1 à 3 et, de préférence, de 0,3 à 0,9 mole par litre de liquide organique. En tous cas, le tensio-actif doit être à une concentration supérieure à sa concentration micellaire critique (cmc) dans l'eau.

Le procédé de l'invention convient à toutes les applications générales de la méthode connue d'extraction liquide-liquide. Bien que les exemples donnés plus loin portent seulement sur l'extraction de cations, le procédé s'applique à l'extraction de toutes sortes de substances minérales ou organiques présentes dans la solution aqueuse, mais susceptibles d'être combinées sous une forme liposoluble. Il peut donc être employé pour l'extraction de composés organiques, par exemple substances pharmaceutiques ou naturelles lorsqu'il est possible de les faire passer en solution dans un liquide hydrophobe.

Comme mentionné plus haut, un important avantage de l'invention réside, outre l'accélération de la vitesse qui reste la propriété fondamentale, dans la possibilité de recycler la phase microémulsionnée,

intermédiaire, pour réutiliser ainsi la presque totalité du tensio-actif présent. Les opérations du procédé peuvent être réalisées à la manière classique, en discontinu ou en continu, notamment dans des cuves à décantation ou dans des colonnes, bien connues dans la technique. Afin de préciser les modalités de la réalisation du procédé, on a représenté, sur le dessin annexé, très schématiquement, un appareil de principe et l'on décrit, ci-après, son fonctionnement en discontinu.

Sur le dessin, 1 représente une cuve à décantation munie d'un agitateur 2. $A_1$ représente l'arrivée de la solution aqueuse à traiter, tandis que le liquide organique est introduit en $O_1$.

Après l'introduction des volumes voulus de liquide par $A_1$ et par $O_1$, on soumet le mélange à une rapide agitation au moyen de l'agitateur 2 qui est ensuite arrêté jusqu'à ce que trois couches distinctes apparaissent dans le bac 1.

Le dessin représente les 3 couches superposées A, M, O, qui se sont formées pendant le repos de quelques minutes après l'agitation.

La couche A est constituée par la solution aqueuse initiale dont a été extrait l'élément voulu, en particulier un cation ; on l'évacue par la canalisation 8. Cette dernière est représentée schématiquement, mais il est bien entendu que, dans la pratique, le montage est tel que seule la couche A soit évacuée par en bas.

La phase organique O, qui a absorbé la majeure partie de l'élément à extraire, est passée par 3 dans une seconde cuve 4 où à lieu la récupération de cet élément. Cette réextraction est effectuée par agitation, au moyen de l'agitateur 5, d'une solution aqueuse $A_2$, de pH différent de celui de A, avec le liquide O. Après cette opération, la solution $A_2$ contient l'élément cherché et elle est soustraite par une sortie 9 en vue des traitements ultérieurs, qui ne font pas partie de l'invention. La couche organique O, ainsi privée de l'élément en question, est récupérée par la conduite 6 pour retourner dans la cuve 1 où elle va rejoindre la couche intermédiaire M qui y a été laissée intacte. Afin de compenser les pertes de liquide organique O qui se produisent dans une opération industrielle, on introduit par 7 un peu de liquide O frais.

Par une arrivée 10, on apporte les petites quantités de tensio-actif, de co-tensio-actif et éventuellement de composés extractants qui ont été perdues au cours de l'évacuation de A par 8 et de $A_2$ par 9.

On introduit alors par $A_1$ une nouvelle portion de solution à traiter. Il suffit alors d'agiter rapidement le contenu de la cuve 1, recommençant ainsi un nouveau cycle opératoire identique au précédent.

Le maintien, dans la cuve, de la couche intermédiaire M, microémulsionnée, qui signifie le recyclage de cette microémulsion, apporte — comme on le voit — une économie substantielle d'agents tensio-actifs.

L'invention est illustrée, non limitativement, par les exemples qui suivent.

Exemple 1

Extraction du cation ferrique de sa solution sulfurique diluée

Dans la cuve de décantation 1, décrite plus haut, on introduit 1 l de kérosène, 41,8 g de phosphate acide de bis(éthyl-2 hexyle) soit 0,2 mole, et l'on ajoute : 50 g de lauryl sulfate de sodium = 0,174 mole, 229 g de n-pentanol, c'est-à-dire 280 ml = 2,6 moles. 1 litre de solution aqueuse de composition suivante est ensuite ajouté :

0,558 g de $Fe^{+++}$, soit 0,01M
14,2 g de $Na_2SO_4$ = 0,1 M
9,8 g de $H_2SO_4$ = 0,1 M

Le tout est agité pendant 2 minutes, après quoi, on laisse reposer. Au bout de 5 mn, on constate que le contenu de la cuve est nettement séparé en les 3 couches O, M et A, comme représenté sur le dessin, et l'on trouve, pour chacune d'elles :

Tableau I

| | Couches | | |
|---|---|---|---|
| | O | M | A |
| Volume (ml) | 990 | 460 | 850 |
| % du volume total | 43 | 20 | 37 |
| % des quantités initiales, mises en jeu : | | | |
| Fe | 84 | 16 | 0 |
| Lauryl-sulfate | 0,5 | 99 | 0,5 |
| Pentanol | 72 | 28 | 0 |
| Phosphate de bis (Et.-2 Hex) | 82 | 18 | 0 |
| Kérosène | 82 | 18 | 0 |
| Solution aqueuse | 0 | 15 | 85 |

On évacue la couche aqueuse, inférieure, A, la phase organique O est envoyée dans un bac de récupération 4, comme décrit plus haut, tandis que la couche intermédiaire M est laissée dans le premier appareil 1.

Aux 990 ml de liquide O, dans le second bac (4) on ajoute le tiers de son volume, soit 330 ml, d'une solution aqueuse d'acide sulfurique 2N ; après une rapide agitation, on laisse reposer, et l'on obtient en 4 minutes une séparation nette en deux couches : l'inférieure, $A_2$, renferme alors la totalité du fer ainsi récupéré en solution sulfurique.

Le kérosène O, surnageant dans le bac 4, est ensuite retransféré dans le décanteur 1, avec le léger appoint de 20 ml kérosène frais contenant 0,2 moles par litre d'extractant, ainsi que les 20 % de n-pentanol perdus pendant les opérations. De cette façon, le volume de 990 ml de la phase 0, du tableau I, donné plus haut, se retrouve dans l'extracteur principal 1.

On introduit ensuite, dans ce dernier, 850 ml (volume du tableau) de solution aqueuse A, ferrique, de composition indiquée plus haut.

Par la tubulure 10, on ajoute des adjuvants (phosphate, lauryl sulfate, pentanol) de façon à rétablir exactement leurs concentrations initiales, compte tenu des résultats du tableau I ci-dessus.

L'extraction et la récupération sont conduites ensuite de la même manière que plus haut. A cette seconde opération, utilisant la phase M recyclée de la première, on retrouve dans la nouvelle phase 0 99 % du $Fe^{+++}$ introduit avec la solution A. Il en est de même lors des opérations subséquentes avec, chaque fois, réutilisation de la couche M de l'opération précédente.

Exemples 2 à 4

Des extractions avec microémulsion, dans un système à 3 phases, comme dans l'exemple 1, sont effectuées sur des solutions renfermant la même concentration en ions $Fe^{+++}$ ou $Al^{+++}$, avec différents agents tensio-actifs, le co-tensio-actif étant le même, le n-pentanol.

Le liquide organique est toujours le kérosène renfermant 41,8 g (0,2 mole) de phosphate de bis-(éthyl-2 héxyle) par litre.

Le tableau ci-après résume les résultats obtenus, à savoir les durées des extractions en minutes.

La dernière ligne horizontale indique les temps nécessaires à l'extraction complète dans des essais similaires, effectués sans tensio-actif, ni pentanol, c'est-à-dire sans création de microémulsion.

A titre de comparaison, on répète, dans ce tableau, les résultats de l'exemple 1 décrit en détail plus haut. Les teneurs en adjuvants s'entendent en poids de la phase organique.

Tableau II

| Exemples n° | 1 | 2 | 3 | 4 |
|---|---|---|---|---|
| Cation | Fe | Fe | Fe | Al |
| Lauryl sulfate de sodium | 5 % | — | — | 5 % |
| Nonyl-phényl-hexa-éthoxylé (« Simulsol 630 ») | — | 5 % | — | — |
| Décyl-éther de glucose (« Triton BG 10 ») | — | — | 5 % | — |
| Pentanol % | 28 | 8 | 18 | 28 |
| Durée d'extraction en mn | 2 | 10 | 5 | 1 |
| Durée d'extraction en mn dans un essai sans tensio-actif | 30 | 30 | 30 | 120 |

On voit que l'avantage, constaté dans l'exemple 1, se confirme avec les deux autres agents tensio-actifs (Simulsol et Triton). A noter que dans ces exemples, tout comme dans l'exemple 1, les tensio-actifs se sont retrouvés en majeure partie dans la phase médiane M, réutilisée.

Exemple 5

Le procédé suivant l'invention est appliqué à l'extraction du nickel d'une solution sulfurique 0,4N renfermant 0,01 atome Ni par litre.

L'extractant utilisé est l'acide di(diisobutyl-méthyl) dithiophosphorique présent à raison de 90,5 g, soit 0,25 mole par litre de Kérosène.

Le tensio-actif est le Nonyl-phényl-hexa éthoxylé (simulsol 630) à une concentration de 40 g/l de kérosène, soit 0,0826 mole/l.

Le co-tensio-actif est l'hexanol-1 : 170 g/l de kérosène, soit 1,67 mole/l.

1 litre de kérosène est employé pour 1 litre de solution sulfurique de nickel.

L'opération avec trois phases, comme dans les exemples précédents, conduit à l'extraction de 99,3 % du nickel présent, en 30 secondes.

Le temps de séparation des phases est de 8 mn.

La phase organique ne contient que 1,5 g d'eau par litre, ce qui conduit à une excellente sélectivité en nickel. La phase intermédiaire, microémulsion, renferme 450 g de solution aqueuse par litre.

Une opération avec le même extractant et le kérosène, sans tensio-actif ni co-tensio-actif, demande 4 fois plus de temps.

Exemples 6 à 10

Des extractions, similaires à celles des exemples 2 à 4, sont effectuées avec des solutions aqueuses de même composition ionique que celle de l'exemple 1, les cations à extraire étant successivement les Ge, Fe et Ni ; l'extractant est ici la (nonyl-3-propényl-1)-7 hydroxy-8 quinoléine (Kelex 100)

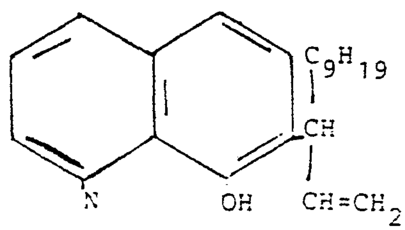

employée à raison de 0,2 ou 0,05 mole par litre de kérosène, soit 62 ou 15,5 g/l.

La nature et le pourcent de tensio-actif et de co-tensio-actif sont indiqués dans le tableau III ci-dessous avec les temps d'extraction du cation concerné ; les pourcent s'y entendent en poids de la phase organique.

Tableau III

| Exemples n° | 6 | 7 | 8 | 9 | 10 |
|---|---|---|---|---|---|
| Cation | Ge | Ge | Fe | Ni | Ni |
| Dodécyl benzène sulfonate de sodium | 5 % | — | — | — | — |
| Nonyl-phényl-hexa-éthoxylé (Simulsol 630) | — | — | 5 % | — | 5 % |
| Décyl-éther de glucose (Triton BG 10) | — | 5 % | — | 5 % | — |
| n-butanol | 12 % | — | — | — | — |
| n-pentanol | — | 12 % | 16 % | — | 14 % |
| n-hexanol | — | — | — | 16 % | — |
| « Kelex 100 » g/l | 62 | 62 | 15,5 | 62 | 62 |
| Durée d'extraction en mn | 2 | 2 | 27 | 10 | 20 |
| Durée d'extraction en mn dans un essai sans tensio-actif | 240 | 30 | 240 | 30 | 240 |

On peut constater que le remplacement de l'extractant phosphorique des exemples 1 à 5 par une quinoléine substituée conduit à d'aussi bons résultats, le temps d'extraction étant réduit souvent en dixième de celui qu'exige la méthode classique, sans microémulsion.

D'autre part, tout comme dans l'exemple 1, on constate que la majeure partie des adjuvants est récupérable avec la phase médiane M du procédé.

## Revendications

1. Procédé d'extraction liquide-liquide d'une substance à partir d'une solution aqueuse par traitement avec un liquide hydrophobe, en présence d'un composé extractant, susceptible de former avec la substance à extraire une combinaison soluble dans le liquide hydrophobe, ce dernier étant mis en microémulsion avec la solution aqueuse, caractérisé en ce que la microémulsion est préparée de telle façon qu'elle soit accompagnée d'une couche distincte de solution aqueuse et d'une couche distincte de liquide hydrophobe.

2. Procédé suivant la revendication 1, dans lequel la microémulsion est préparée par l'adjonction d'un ou de plusieurs agents tensio-actifs et d'un ou de plusieurs co-tensio-actifs, en particulier d'alcools, caractérisé en ce que les proportions d'agents tensio-actifs et de co-tensio-actifs sont réglées de façon à ce que, après l'agitation, le système se présente sous la forme de trois couches distinctes, dont l'intermédiaire est constituée par une microémulsion.

3. Procédé suivant la revendication 1 ou 2, caractérisé en ce que la couche intermédiaire de microémulsion est réutilisée chaque fois dans l'extraction suivante, alors que la couche hydrophobe est soumise à la récupération de la substance recherchée, tandis que la couche aqueuse est évacuée.

4. Procédé suivant la revendication 3, caractérisé en ce que dans l'extraction utilisant une couche intermédiaire, de microémulsion, la quantité de liquide hydrophobe employée est égale à celle qui s'était séparée de la couche intermédiaire, dans l'opération précédente, et que la quantité de solution aqueuse ajoutée est égale à celle qui s'était séparée dans l'opération précédente.

5. Procédé suivant une des revendications 1 à 4, dans lequel le liquide hydrophobe est constitué d'un hydrocarbure aliphatique ou aromatique ou d'un mélange des deux ; éventuellement halogéné, contenant en solution un composé extractant et du co-tensio-actif.

6. Procédé suivant une des revendications précédentes, dans lequel le composé extractant est un composé organo phosphoré, un dérivé de l'hydroxy-8-quinoléine ou une hydroxy oxime.

7. Procédé suivant une des revendications précédentes, dans lequel l'agent tensio-actif est anionique ou non ionique, en particulier un alkyl-aryl sulfonate, un phénol éthoxylé, un alkyl-phénol éthoxylé, un polyalcool polyéthoxylé ou un alkyl éther d'hydrate de carbone.

8. Procédé suivant une des revendications précédentes, dans lequel le co-tensio-actif est un alcool en $C_3$ à $C_{16}$.

9. Application du procédé suivant une des revendications 1 à 8 à l'extraction de cations de leurs solutions aqueuses, caractérisée en ce que le système à trois couches liquides, comportant une couche intermédiaire de microémulsion, est obtenu avec des concentrations d'agents tensio-actifs de 0,025 à 0,4 mole/l de liquide hydrophobe et de 0,1 à 3 mole d'alcools, par litre du liquide hydrophobe.

10. Application, suivant la revendication 9, à l'extraction de métaux des groupes II à VIII de la Classification Périodique des Eléments, en particulier de Pt, Pd, Rh, U, Ni, Fe, Al, Ge, Cu.

**Claims**

1. Process of liquid-liquid extraction of a substance from an aqueous solution by treatment with a hydrophobic liquid, in the presence of an extractant compound capable of forming, with the substance to be extracted, a combination soluble in the hydrophobic liquid, the latter forming a microemulsion with the aqueous solution, characterized in that the microemulsion is prepared in such a manner that it is accompanied by a distinct layer of the aqueous solution and a distinct layer of the hydrophobic liquid.

2. Process according to claim 1, in which the microemulsion is prepared by adding one or more surfactant agents and one or more co-surfactants, particularly alcohols, characterized in that the proportions of the surfactant agents and the co-surfactants are regulated so that, after agitation, the system has the form of three distinct layers, the intermediate one of which is constituted by a microemulsion.

3. Process according to claim 1 or 2, characterized in that the intermediate layer of the microemulsion is re-used each time in the following extraction, the hydrophobic layer is subjected to recovery of the substance desired and the aqueous layer is discharged.

4. Process according to claim 3, characterized in that, in the extraction using an intermediate layer of microemulsion, the quantity of hydrophobic liquid employed equals that separated from the intermediate layer in the preceding operation and that the quantity of aqueous solution added equals that separated in the preceding operation.

5. Process according to any of claims 1 to 4, in which the hydrophobic liquid is constituted by an aliphatic or aromatic hydrocarbon or a mixture of the two, halogenated if required, containing in solution an extractant compound and the co-surfactant.

6. Process according to any of the preceding claims, in which the extractant compound is an organophosphorus compound, a derivative of 8-hydroxyquinoline or a hydroxyoxime.

7. Process according to any of the preceding claims, in which the surfactant agent is anionic or nonionic, particularly an alkyl-aryl sulphonate, an ethoxylated phenol, an ethoxylated alkyl-phenol, a polyethoxylated polyalcohol or an alkyl ether of a carbohydrate.

8. A process according to any of the preceding claims, in which the co-surfactant is a $C_3$-$C_{16}$ alcohol.

9. Application of the process according to any of claims 1 to 8 to the extraction of cations from their aqueous solutions, characterized in that the system of 3 liquid layers comprising an intermediate layer of microemulsion is obtained with concentrations of the surfactant agents from 0.025 to 0.4 mole/l of hydrophobic liquid and from 0.1 to 3 mole of alcohols per litre of hydrophobic liquid.

10. Application according to claim 9 to the extraction of metals of Groups II to VIII of the Periodic Classification of the Elements, in particular Pt, Pd, Rh, U, Ni, Fe, Al, Ge, Cu.

**Patentansprüche**

1. Verfahren zur Flüssig-Flüssig-Extraktion einer Substanz aus einer wäßrigen Lösung durch Behandeln mit einer hydrophoben Flüssigkeit in Anwesenheit einer extrahierenden Verbindung, die mit der zu extrahierenden Substanz eine Kombination bilden kann, die in der hydrophoben Flüssigkeit löslich ist, wobei letztere mit der wäßrigen Lösung zur Mikroemulsion gebracht wird, dadurch gekennzeichnet,

daß die Mikroemulsion derart hergestellt wird, daß neben ihr eine getrennte wässrige Lösungs-Schicht und eine getrennte hydrophobe Flüssigkeits-Schicht vorliegen.

2. Verfahren nach Anspruch 1, bei dem die Mikroemulsion hergestellt wird durch Zusatz von einem oder mehreren oberflächenaktiven Mitteln und von einem oder mehreren co-oberflächenaktiven Mitteln, insbesondere von Alkoholen, dadurch gekennzeichnet, daß die Anteile von oberflächenaktiven Mitteln und co-oberflächenaktiven Mitteln derart gesteuert werden, daß nach dem Rühren das System in der Form von 3 getrennten Schichten vorliegt, wobei die Zwischenschicht aus einer Mikroemulsion besteht.

3. Verfahren nach Anspruch 1 oder 2, dadurch gekennzeichnet, daß die Mikroemulsionszwischenschicht jedes Mal in der folgenden Extraktion wiederverwendet wird, während die hydrophobe Schicht der Wiedergewinnung der gewünschten Substanz unterzogen wird und die wäßrige Schicht verdampft wird.

4. Verfahren nach Anspruch 3, dadurch gekennzeichnet, daß bei der Extraktion, unter Verwendung einer Mikroemulsionszwischenschicht, die Menge der verwendeten hydrophoben Flussigkeit gleich der ist, die sich bei dem vorhergehenden Arbeitsgang von der Zwischenschicht abgeschieden hatte und daß die Menge der zugefügten waßrigen Lösung gleich der ist, die sich bei dem vorhergehenden Arbeitsgang abgeschieden hatte.

5. Verfahren nach einem der Ansprüche 1 bis 4, bei dem die hydrophobe Flüssigkeit aus einem gegebenenfalls halogenierten, eine extrahierende Verbindung und das co-oberflächenaktive Mittel in Lösung enthaltenden aliphatischen oder aromatischen Kohlenwazsserstoff oder aus einem Gemisch der beiden besteht.

6. Verfahren nach einem der vorhergehenden Ansprüche, bei dem die extrahierende Verbindung eine Organophosphorverbindung, ein Derivat von 8-Hydroxychinolin oder ein Hydroxyoxim ist.

7. Verfahren nach einem der vorhergehenden Ansprüche, bei dem das oberflächenaktive Mittel anionisch oder nicht-ionisch ist, und insbesondere ein Alkylarylsulfonat, ein ethoxyliertes Phenol, ein ethoxyliertes Alkylphenol, ein polyethoxylierter Polyalkohol oder ein Kohlenhydratalkylether ist.

8. Verfahren nach einem der vorhergehenden Ansprüche, bei dem das co-oberflächenaktive Mittelein $C_3$ bis $C_{16}$-Alkohol ist.

9. Verwendung des Verfahrens gemäß einem der Ansprüche 1 bis 8 zur Extraktion von Kationen aus ihren wäßrigen Lösungen, dadurch gekennzeichnet, daß das System mit 3 flüssigen Schichten, Das eine Mikroemulsionszwischenschicht enthält, erhalten wird mit Konzentrationen von oberflächenaktiven Mitteln von 0,025 bis 0,4 Mol/1 der hydrophoben Flüssigkeit und 0,1 bis 3 Mol Alkoholen pro Liter der hydrophoben Flüssigkeit.

10. Verwendung nach Anspruch 9 zur Extraktion von Metallen der Gruppen II bis VIII des Periodensystems der Elemente, insbesondere von Pt, Pd, Rh, U, Ni, Fe, Al, Ge, Cu.

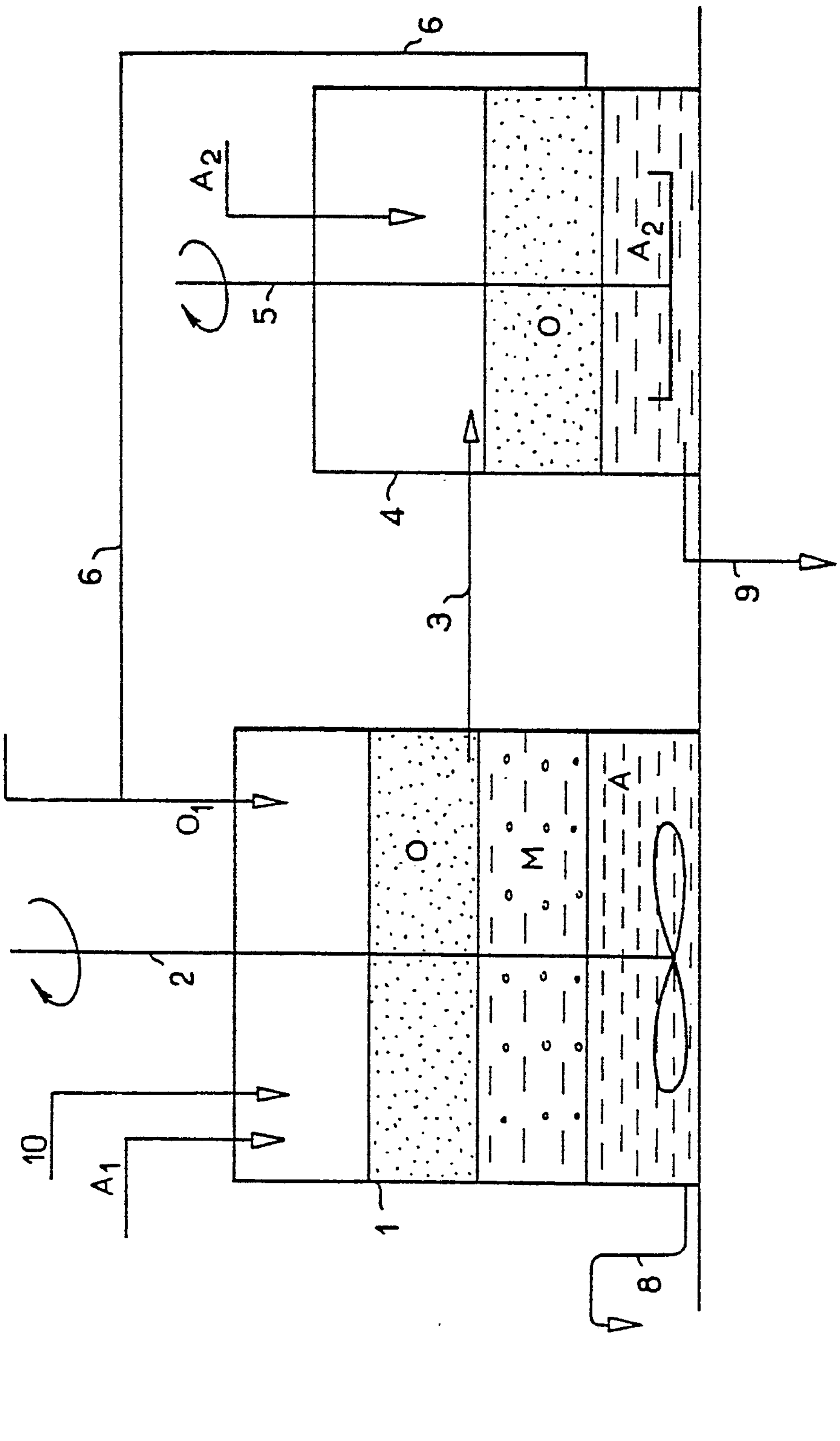

1
2
3
4
5
6
7
8
9
10
$A_1$
$A_2$
$O_1$
O
M
A